# EUROPÄISCHE PATENTSCHRIFT

(11) **EP 2 108 532 B1**
(45) Veröffentlichungstag und Bekanntmachung des Hinweises auf die Patenterteilung: **18.08.2010**
(21) Anmeldenummer: 09005016.2
(22) Anmeldetag: 04.04.2009
(51) Int. Cl.: B60C 25/14

(54) **Verfahren und Vorrichtung zum gesteuerten Befüllen von montierten Fahrzeugrädern**
Method and device for managed filling of fitted vehicle wheels
Procédé et dispositif de remplissage commandé de roues de véhicule montées

(30) Priorität: 09.04.2008 DE 102008018109
(43) Veröffentlichungstag der Anmeldung: 14.10.2009
(73) Patentinhaber: Schenck RoTec GmbH, 64293 Darmstadt (DE)
(72) Erfinder: Peinelt, Andreas, 64319 Pfungstadt (DE)
(74) Vertreter: Behrens, Helmut

(56) Entgegenhaltungen:
- DE-A1- 4 101 304
- DE-A1-102005 045 169

## Beschreibung

Die Erfindung betrifft ein Verfahren zum gesteuerten Befüllen eines auf einer Felge montierten Reifens nach dem Oberbegriff des Patentanspruchs 1, sowie eine Vorrichtung zur Durchführung des Verfahrens nach dem Oberbegriff des Patentanspruchs 11.

Bei der industriellen Herstellung von Fahrzeugrädern werden zunächst die zusammengehörenden Felgen und Reifen getrennt herangeführt und nachfolgend in verschiedenen Fertigungsstationen nacheinander bis zum fertigen Komplettrad bearbeitet. Dazu müssen zunächst die Felgen und Reifen typmäßig erfasst, geseift und montiert werden. Anschließend werden die montierten Räder meist automatisch mit einem radzusammenbauabhängigen Luftdruck befüllt und ausgewuchtet, um dann am Auto befestigt werden zu können. Eine derartige Räderfertigung unterliegt einer hohen Qualitätskontrolle, da ein schlecht gefertigtes Fahrzeugrad insbesondere bei hohen Geschwindigkeiten ein Sicherheitsrisiko darstellt und auch das Fahrverhalten eines Fahrzeuges stark beeinflussen kann. Da die einzelnen Fertigungsstufen zum Teil voneinander abhängen, könnte ein Fehler in einer Vorstufe zum Überschreiten geforderter Qualitätstoleranzen beim fertigen Rad führen, so dass dann dieses nicht mehr verwendbar ist. Jede Fertigungsstation in dieser Herstellungslinie wird deshalb so ausgeführt, dass die dort zulässige Fertigungstoleranz möglichst eingehalten wird.

Aus einer derartigen Fertigungslinie zur Herstellung von Fahrzeugrädern ist aus der DE 35 46 183 C2 eine Füllstation bekannt, die eine hohe Taktzeit bei einer sehr geringen Fülldrucktoleranz aufweist. Dazu ist eine Füllglocke vorgesehen, die von oben über einen Hubzylinder auf ein horizontal angeordnetes Fahrzeugrad abgesenkt wird. Die Füllglocke ist dabei so ausgebildet, dass sie mit ihrer ringförmigen Dichtfläche auf der oberen Reifenseitenwand aufliegt. Dabei lässt sich der axiale Abstand des Dichtringes gegenüber dem Felgenhorn verstellen, so dass mit dieser Füllstation verschiedene Reifen und Felgentypen automatisch befüllt werden können. Zum Befüllen der verschiedenen Fahrzeugräder wird zunächst der Reifentyp erfasst. Der Reifendichtring der Füllglocke so eingestellt, dass beim abdichtenden Aufliegen des Dichtringes der Aussenrand den Reifenwulst soweit ins Felgenbett drückt, dass zwischen der Felgenschulter und der Reifenwulst ein Ringspalt verbleibt, durch den der Reifen mit Druckluft befüllbar ist. Sobald der Dichtring beim Absenken auf dem Reifen dicht aufliegt, wird ein Füllventil geöffnet, so dass sich der Reifen stossartig über den Ringspalt mit einem vorgegebenen Druck füllt. Dabei drückt sich durch den gefüllten Reifen der Aussenrand der Füllglocke nach oben, so dass sich der obere Reifenwulst an die innere Ringfläche des Felgenhorns dichtend anlegt. Dann wird die Füllglocke durch eine Schnellentlüftungsventil entleert, so dass der Reifen mit dem vorgegebenen Nenndruck gefüllt ist und die Füllglocke durch die Hubvorrichtung nach oben bewegt wird. Durch einen zu geringen Seifgrad, Temperatur oder größeren Abweichungen der Reifen- oder Felgenabmessungen kann es allerdings vorkommen, dass durch den vorgegebenen Fülldruck die Reifenwülste sich nicht vollständig dichtend an der Felgenschulter anlegen, so dass Undichtigkeiten entstehen oder der ungenaue Reifensitz den Rundlauf des befüllten Komplettrades ungünstig beeinflusst.

Aus der gattungsbildenden DE 10 2005 045 169 A1 ist eine Füllstation bekannt, die eine Überwachungseinrichtung aufweist, die nach dem Füllvorgang das Fahrzeugrad auf Dichtigkeit überprüft. Dazu ist ebenfalls eine Füllglocke vorgesehen, die von oben auf die Seitenwand eines horizontal ausgerichteten auf einer Felge montierten Reifens über eine Hubvorrichtung abgesenkt wird.

Dabei wird der Reifenwulst soweit in das Felgenbett abgesenkt, dass ein Ringspalt zum Befüllen verbleibt. Von unten ist die Felge über eine Aufnahmeplatte abgedichtet, auf der vorzugsweise die untere Reifenseitenwand aufliegt. Desweiteren ist der Innenraum der Füllglocke noch mit einem Drucksensor versehen, der mit der Überwachungseinrichtung verbunden ist. Zum Befüllen wird nun eine mit der Füllglocke verbundene Druckluftleitung über ein Ventil geöffnet, bis die Überwachungseinrichtung einen vorgegebenen Initialdruck erfasst. Dieser ist so bemessen, dass er den für den jeweils vorgesehenen Reifentyp vorgegebenen Nenndruck um einen geringen Druckanteil übersteigt. Danach wird die Füllglocke über die Hubeinrichtung soweit nach oben bewegt, bis der obere Reifenwulst in den Felgenrand eingesprungen ist und den Reifeninnenraum abdichtet. Durch die Vergrößerung des Innenraumes unter der Füllglocke während des Hubvorganges sinkt der Innendruck bis zum Abdichtungszeitraum bei richtiger Befüllung um einen geringen Anteil bis auf den Reifennenndruck ab. Danach wird durch die Überwachungseinrichtung der Druck im Füllglockeninnenraum weiter auf einen vorgesehenen Prüfdruck angesenkt und dieser Druckwert einen vorgegebenen Prüfzeitraum durch den Drucksensor gemessen. Bleibt der Druck konstant, ist das geprüfte Fahrzeugrad dicht und kann zur Weiterbearbeitung in die Auswuchtstation freigegeben werden. Durch die Überwachungseinrichtung kann jedoch nicht geprüft werden, ob der Reifenwulst gleichmäßig und unbeschädigt in den Felgensitz eingesprungen ist, da diese Fehler erst durch nachträgliches Walken während des Fahrbetriebes auftreten und erst dann zu einem Druckverlust oder einem Unrundlauf führen können.

Der Erfindung liegt deshalb die Aufgabe zugrunde, den Befüllvorgang des montierten Fahrzeugrades so zu verbessern, dass ein fehlerhafter oder ungenauer Sitz des Reifens auf der Felge vermieden wird.

Diese Aufgabe wird durch die im Patentanspruch 1 und 11 angegebene Erfindung gelöst. Weiterbildungen und vorteilhafte Ausführungsbeispiele der Erfindung sind in den Unteransprüchen angegeben.

Die Erfindung hat den Vorteil, dass durch einen gesteuerten Füllvorgang der Reifensitz auf der Felge so verbessert werden kann, dass sich dadurch gleichzeitig auch die Rundlaufgüte des fertigen Fahrzeugrades erhöhen lässt. Insbesondere die Berücksichtung ungünstiger Vorfertigungsparameter hat den Vorteil, dass dessen Einfluss auf den Füllvorgang durch entsprechende Drucksteuerung ausgleichbar ist. So hat insbesondere die Berücksichtigung der Reifenkerntemperatur den Vorteil, dass eine dadurch veranlasste ungünstige Elastizitätsänderung des Reifens durch eine entsprechende Fülldruckerhöhung kompensierbar ist, wobei auch gleichzeitig reifentypabhängige Elastizitätsfaktoren durch Vorgabe von Referenzfaktoren berücksichtigt werden können. Auch die Berücksichtung eines erhöhten Aufziehdrehmoments bei der Reifenbefüllung hat den Vorteil, dass dadurch verursachte Aufziehungenauigkeiten oder erhöhte Reibungswiderstände durch eine gesteuerte Abweichung von einem statischen Fülldruck ausgleichbar sind.

Eine besondere Ausführung des Verfahrens, bei dem ein ungünstiger Seifgrad der Felge und des Reifens berücksichtigt wird, hat den Vorteil, dass dieser durch eine entsprechende Druckerhöhung während des Füllvorganges kompensierbar ist. Dies trifft ebenso für die Berücksichtigung ungünstiger Toleranzen beim Felgendurchmesser zu, dessen dadurch verursachter erhöhter Reibungswiderstand zwischen dem Reifenwulst und der Felgenschulter durch eine entsprechende Initialdruckerhöhung vorteilhafterweise überwindbar ist.

Bei einem weiteren besonderen Füllverfahren ist zusätzlich vorgesehen, den ordnungsgemäßen Füllvorgang durch ein akustisches Signal zu überwachen, was den Vorteil hat, dass sich ein so festgestellter Fertigungsfehler durch eine Wiederholung des Füllvorganges mit einer Druckerhöhung auf einfache Art beheben lässt. Dabei hat die Berücksichtigung mehrerer ungünstiger Vorfertigungsparameters den Vorteil, dass dadurch verschiedene Montagefehler ausgleichbar sind, die ansonsten zu erheblichen Fertigungsverzögerungen führen würden, weil bei derartigen industriellen Räderfertigungslinien nacheinander verschiedenartige Rädersätze mit vorbestimmten Reifen-Felgen-Kombinationen gefertigt werden, die durch ein nachfolgend gefertigtes Fahrzeugrad nicht ergänzt werden können.

Eine weitere besondere Ausführung des Füllverfahrens mit einer axialen Nachdrückfunktion durch die Füllglocke auf das befüllte Fahrzeugrad hat den Vorteil, dass dadurch sowohl der ordnungsgemäße Fülldruck im Reifen überprüft werden kann und gleichzeitig durch den seitlichen Walkvorgang auch eine Reifensitzverbesserung erzielbar ist. Insbesondere bewirkt vorteilhafterweise die Berücksichtigung jedes ungünstigen Fertigungsparameters bei dem gesteuerten Füllvorgang jeweils einen speziellen Verbesserungsschritt, der insgesamt zu einer Optimierung der Befüllung führt.

Dabei hat die erfindungsgemäße Vorrichtung den Vorteil, dass zur Berücksichtigung der ungünstigen Vorfertigungsparameter meist keine zusätzlichen Sensoren vorgesehen werden müssen, da in den meisten Räderfertigungslinien die Reifen- und Felgentypen automatisch abgetastet, die Felgengeometrie gemessen und die vorgegebene Seifmenge, die Reifenkerntemperatur und das Aufziehmoment mit bereits vorhandenen Sensoren überwacht wird. Deshalb kann das erfindungsgemäße Füllverfahren vorteilhafterweise auch durch eine programmgesteuerte zentrale Rechenvorrichtung gesteuert werden, in der die typabhängigen Reifen- und Felgenparameter bereist zur automatisierten Montage vorhanden sein müssen und in der die erfassten Fertigungsparameter auch für die vorhergehenden Fertigungsschritte gespeichert sind. Die zusätzlichen Auswerte- und Steuerungsschritte sind deshalb auf einfache Weise in die digitale Auswerte- und Steuervorrichtung einprogrammierbar.

Diese Erfindung wird anhand eines Ausführungsbeispiels, das in der Zeichnung dargestellt ist, näher erläutert. Es zeigen:
- Fig. 1: eine schematische Darstellung einer Fertigungslinie zur Herstellung von Fahrzeugrädern, und
- Fig. 2: eine schematisch dargestellte Reifenfüllstation zum gesteuerten Befüllen eines montierten Fahrzeugrades

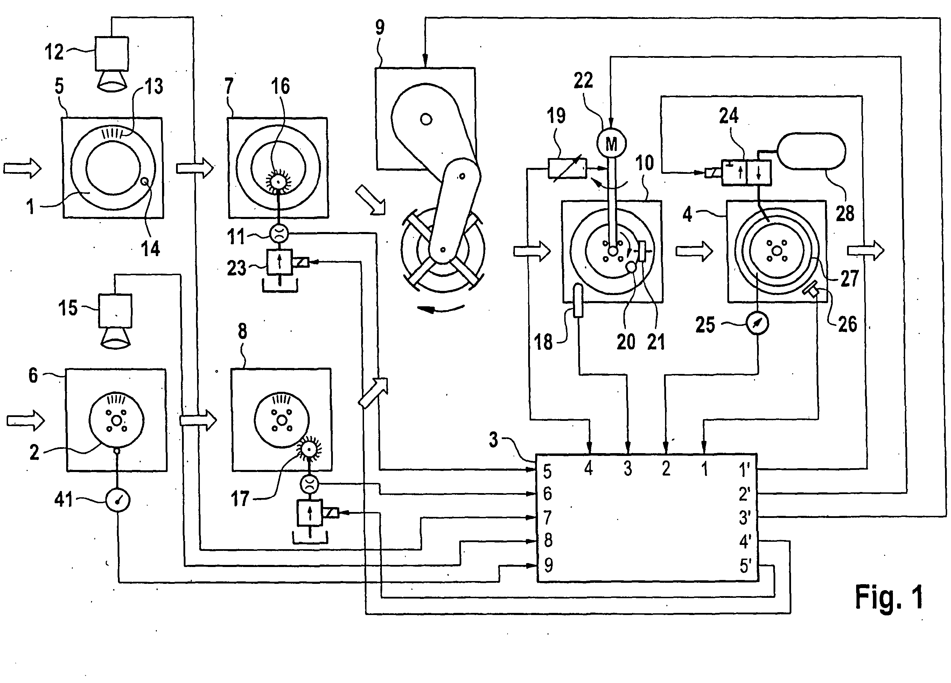

In Fig. 1 der Zeichnung ist schematisch eine Räderfertigunglinie dargestellt, bei der ein Reifen 1 auf einer Felge 2 montiert und aufgrund der dabei erfassten Fertigungsparameter so befüllt wird, dass der Reifensitz auf der Felge 2 optimiert ist, wobei eine Auswerte- und Steuervorrichtung 3 vorgesehen ist, die den Fülldruck in der Füllstation 4 mindestens in Abhängigkeit der Reifentemperatur und des Aufzugsdrehmoments und/oder Felgengeometrie steuert.

Dazu umfasst die Fertigungslinie eine Typvorgabe für Reifen und Felgen via Produktionsdatensystem oder eingangsseitig eine Reifenerfassungsstation 5 mit nachfolgender Reifenseifstation 7 und parallel dazu eine Felgenmessstation 6 mit anschließender Felgenseifstation 8. Dabei ist in der Reifenerfassungsstation 5 eine erste optische Erfassungsvorrichtung 12 vorgesehen, mit der der zugeführte Reifentyp vorzugsweise als am Reifen befestigter Strichcode 13 erfasst wird. Meist wird auch noch die Winkellage der maximalen Radialkraftschwankung in Form eines Markierungspunktes (roter Punkt) auf der oberen Reifenseitenwand abgetastet, der zum Radialkraftmatchen dient. Beide Daten werden in eine angeschlossene zentrale Auswerte- und Steuervorrichtung 3 übertragen und gespeichert und geprüft.

Die dazu parallel zugeführte Felge 2 wird in der Felgenmessstation 6 durch eine zweite optische Erfassungsvorrichtung 15 abgetastet, wobei auch an der Felge meist ein Strichcode vorgesehen ist, der den Felgentyp enthält. Daraus können in der angeschlossenen Auswerte- und Steuervorrichtung 3 die dort eingespeicherten Felgenparameter als Felgengeometriedaten ermittelt werden. Gleichzeitig wird in der Felgenmessstation 6 noch die Winkellage der maximalen Felgenexzentrizität und der Durchmesser der Felgenschulter 38 als Reifensitz gemessen und in der Auswerte- und Steuervorrichtung 3 gespeichert und geprüft.

Nachfolgend werden sowohl die Felge 2 als auch der Reifen 1 in die jeweils zugehörige Reifenseifstation 7 oder Felgenseifstation 8 gefördert, wobei mindestens der Reifenwulst 40 als auch der Reifensitz 38 an der Felge 2 mit einer Seifflüssigkeit benetzt wird, um den Aufziehvorgang zu erleichtern. Um den Reifenwulst 40 und den Reifensitz 38 zu benetzen, enthalten die Seifstationen 7, 8 meist einen mit Seifflüssigkeit gespeisten Bürstensatz 16, 17 oder eine Sprühdüse mit der die vorgegebenen Stellen mindestens während einer Umdrehung benetzt werden. Dazu enthalten die Seifstationen 7, 8 entsprechend Seifventile 23, die während einer Reifen- oder Felgenumdrehung oder einer gewissen Sprühzeit geöffnet werden, um eine vorgegebene Seifmenge einer bestimmten Seifflüssigkeit aufzutragen. Dazu wird in einem Probedurchlauf für jeden Reifen- und Felgentyp eine Referenzseifmenge ermittelt, bei der das Aufzugsdrehmoment während des nachfolgenden Aufziehvorgangs ein bestimmtes Aufzugsdrehmoment von vorzugsweise 80-250 Nm nicht überschreitet. Aufgrund der erfassten Reifen- und Felgentype wird die Seifstation 7, 8 durch die Auswerte- und Steuervorrichtung 3 so gesteuert, dass die Seifventile 23 zur Seifmengenreglung eine bestimmte Referenzseifmenge zuführen, mit der der Reifen 1 und die Felge 2 an den vorgegebenen Stellen benetzt wird und die von einem Seifmengenmessgerät 11 überwacht wird.

Nachfolgend werden die Felge 2 und der zugehörige Reifen 1 vorzugsweise von einem Montageroboter 9 nacheinander ergriffen und auf einem Montagetisch abgelegt, wobei der Reifen 1 mit seinem unteren Reifenwulst über den oberen Felgenrand in das Felgenbett gedrückt wird. Gesteuert von der Auswerte- und Steuervorrichtung 3 wird dabei der Reifen 1 gegenüber der Felge 2 in seiner Winkellage so gegenüber der Winkellage der Felge 2 verdreht, dass die maximale Radialkraftabweichung des Reifens 1 mit seinem roten Punkt der maximalen Exzentrizität der Felge 2 als sogenanntes "Punkt-zu-Punkt-matchen" um 180° gegenüberliegt. Dadurch kompensiert sich die Radialkraftschwankung des Reifens 1 mit der durch die Exzentrizität verursachten Radialkraftschwankung der Felge 2 mit ihren jeweiligen Beträgen. Dadurch wird bereits eine Optimierung der Radialkraftschwankungen erreicht.

Entsprechend dieser Winkellagen wird dann das vormontierte Fahrzeugrad zur nachfolgenden Aufziehstation 10 gefördert, durch die der obere Reifenwulst 40 über dem oberen Felgenrand in das Felgenbett aufgezogen wird. Dazu enthält die Aufziehstation 10 einen Aufziehkopf, an dem eine auf die Seitenwand des Reifens gerichtete Eindruckrolle 21 und ein Wulstabweiser 20 vorgesehen ist, wobei die Eindruckrolle 21 während einer Umdrehung des Aufziehkopfes den Reifenwulst 40 ins Felgenbett drückt, wobei der vorlaufende Wulstabweiser 20 den Reifenwulst 40 radial über das Felgenhorn lenkt. Um dabei eine Beschädigung des Reifens 1 zu vermeiden, darf die Reifenkerntemperatur möglichst einen Wert von 18°C nicht unterschreiten und ein vorgegebenes Aufziehdrehmoment des Aufziehkopfes von meist 300 Nm nicht überschreiten. Deshalb ist am Antriebsmotor 22 des Aufziehkopfes ein Drehmomentsensor 19 und am umlaufenden Reifen 1 ein Temperatursensor 18 vorgesehen, die beide mit der Auswerte- und Steuervorrichtung 3 verbunden sind. Aufgrund eines Probelaufs ist dabei für jeden vorgesehenen Reifentyp ein mittleres und maximal zulässiges Aufziehdrehmoment vorgegeben, dessen Einhaltung durch die Auswerte- und Steuervorrichtung 3 während des Aufziehvorgangs überwacht und beim Überschreiten des maximalen Aufziehdrehmoments signalisiert wird. Gleichfalls wird auch die Reifentemperatur mindestens vor dem Aufziehvorgang erfasst und in der Auswerte- und Steuervorrichtung 3 mit der für den jeweiligen Reifentyp maximal zulässigen unteren Aufziehtemperatur von z.B. 18°C verglichen und bei deren Überschreitung der Montagevorgang unterbrochen oder signalisiert. Ein so vormontiertes Fahrzeugrad ermöglicht bei ordnungsgemäßer Befüllung mit einem vorgesehenen typabhängigen Nenndruck einen genauen Reifensitz auf der Felge 2 und damit einen guten Rundlauf des fertigen Fahrzeugrades.

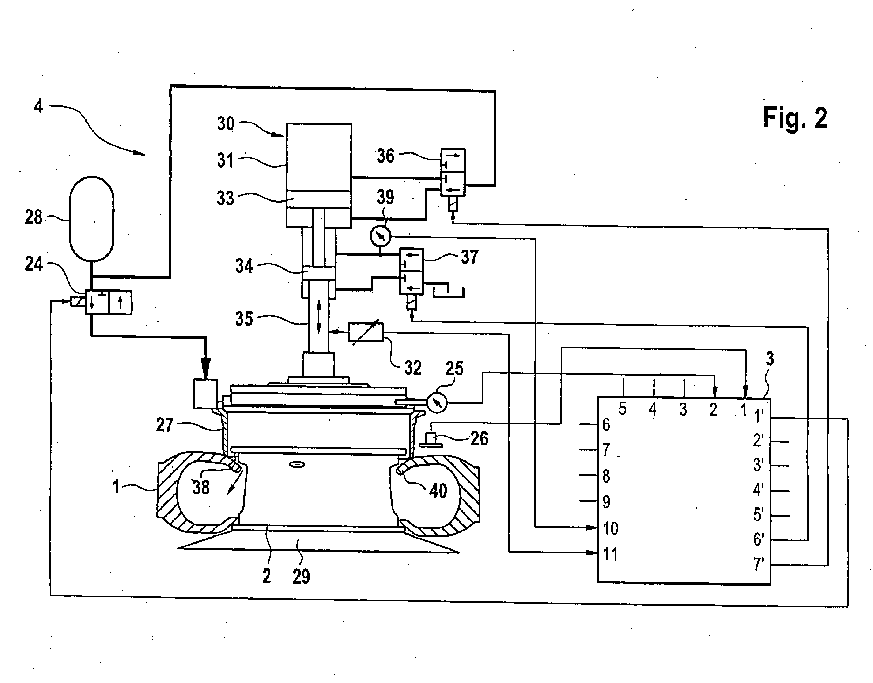

Der Rundlauf und Reifensitz kann durch den erfindungsgemäßen Füllvorgang zusätzlich optimiert werden. Dazu ist nachfolgend die Füllstation 4 vorgesehen, die einen durch die zentrale Auswerte- und Steuervorrichtung 3 gesteuerten Füllvorgang des montierten Fahrzeugrades ermöglicht und die in Fig. 2 der Zeichnung näher dargestellt ist. Die Füllstation 4 umfasst dazu einen Druckaufnehmer 25, der den Fülldruck als Initialdruck in einer Füllglocke 27 kontinuierlich erfasst. Gleichzeitig enthält die Füllstation 4 ein steuerbares Einlassventil 24, durch das der Initialdruck in der Füllglocke 27 durch die Auswerte- und Steuervorrichtung 3 steuerbar ist.

Zusätzlich enthält die Füllstation 4 noch einen Schallsensor 26, durch den das Einspringen der Reifenwülste 40 in den Reifensitz 38 der Felge 2 akustisch erfassbar ist. Zur Betätigung der Füllglocke 27 ist über den herangeführten horizontal auf der Felge 2 montierten Reifen 1, der auf einer Dichtungsplatte 29 nach außen abgedichtet gelagert ist, eine Hubvorrichtung 30 angeordnet. Die Hubvorrichtung 30 umfasst einen Kombizylinder 38, der aus einem oberen Druckluftteil 33 und einem unteren Hydraulikteil 34 besteht, wobei der Hydraulikteil 34 über eine Hubstange 35 mit der Füllglocke 27 fest verbunden ist. Dabei wird der Hubweg der Füllglocke 27 durch einen Wegaufnehmer 32 erfasst, der mit der Auswerte- und Steuervorrichtung 3 elektrisch gekoppelt ist. Dabei enthält die Auswerte- und Steuervorrichtung 3 elf Eingangs- (1 bis 11) und sieben Steuerkanäle (1' bis 7'), deren Beschaltung in Fig. 1 und Fig. 2 identisch ist, wobei die Beschaltung in Fig. 2 nicht vollständig dargestellt ist.

Das erfindungsgemäße Verfahren zur gesteuerten Befüllung der Fahrzeugräder in der Füllstation 4 erfolgt durch die nachfolgend beschriebenen Verfahrensschritte:
Der in der Aufziehstation 10 auf die Felge 2 aufgezogene Reifen 1 wird in der Füllstation 4 horizontal über Fördervorrichtungen angeliefert und zentral unter der Füllglocke 27 und auf der Dichtungsplatte 29 fixiert. Daraufhin wird durch die Auswerte- und Steuervorrichtung 3 das Pneumatikventil 36 elektrisch angesteuert, so dass die aus dem Druckluftspeicher 28 entnommene Druckluft in die obere Zylinderkammer des Kombizylinders 31 gelangt und die Hubvorrichtung 30 solange absenkt, bis die Füllglocke 27 auf der oberen Reifenseitenwand aufliegt. Dieser Absenkvorgang wird vom Wegaufnehmer 32 überwacht, wobei der Absenkweg durch eine Probebefüllung eines gleichartigen Reifentyps auf vergleichbarer Felge 2 ermittelt und in der Auswerte- und Steuervorrichtung 3 gespeichert ist. Dann wird der Hydraulikteil 34 des Kombizylinders 31 über das Hydraulikventil 37 angesteuert, das durch eine erhöhte Absenkkraft auf die obere Reifenseitenwand den unteren Reifenwulst in den unteren Felgensitz eindrückt und zwischen dem oberen Reifenwulst 40 und der Felgenschulter 38 einen Ringspalt bildet. Dabei ist die Breite des Ringspaltes ebenfalls durch eine Probefüllung eines gleichartigen Reifentyps vorgegeben worden und wird durch den Wegaufnehmer 32 und die Vorgabe in der Auswerte- und Steuervorrichtung 3 überwacht.

Zur optimierten Befüllung ermittelt die Auswerte- und Steuervorrichtung 3 aus den erfassten Reifentypdaten einen vorgegebenen Reifennenndruck als minimalen Initialdruck, mit dem mindestens die Füllglocke 27 beaufschlagt werden müsste und der durch den Druckaufnehmer 25 während des Füllvorgangs überwachbar ist. Da die Reifentemperatur den Reifen 1 in seiner Elastizität erheblich beeinflussen kann, legt sich beim Befüllen ein Reifen 1 mit höherer Kerntemperatur besser an den Reifensitz an, als ein kälterer Reifen, zumindest weil dabei der Reifenwulst 40 passgenau auf die Reifenschulter 38 aufgedrückt werden muss. Deshalb wird die in der Montagestation zuvor erfasste Reifentemperatur in der Auswerte- und Steuervorrichtung 3 mit der in einem Probebetrieb erfassten Referenztemperatur verglichen und bei einer Abweichung zu niedrigeren Temperaturen wird daraus eine Druckerhöhung mit einem Druckaufschlag errechnet, um den der Initialdruck in der Füllglocke erhöht wird, wobei sich in der Praxis Druckaufschläge von 0,03 bar pro 1°C Temperaturdifferenz als ausreichend erwiesen haben.

Desweiteren lässt sich der Reifensitz und das Füllverhalten auch vom Aufzugsdrehmoment ableiten, da bei einem hohen Aufzugsdrehmoment der Reifen 1 an seiner Wulst 40 eine geringe Elastizität oder eine verringerte Seifbenetzung aufweist, die den Reifenwulst 40 nur sehr schwer über die Felgenschulter 38 in den Reifensitz einspringen lässt. Dadurch entsteht teilweise eine Abweichung der Reifensitzqualität von einem im Probebetrieb ermittelten mittleren Aufzugsdrehmoment. So sind in der Praxis Aufziehdrehmomente von 80-250 Nm üblich, so dass im Probebetrieb eine Seifmenge festgelegt wird, bei der ein mittleres Aufziehmoment von vorzugsweise 150 Nm erreichbar ist. Das in der Aufziehstation 10 gemessene Aufziehmoment wir deshalb in der Auswerte- und Steuervorrichtung 3 mit dem vorgegebenen Referenzdrehmoment von z.B. 150 Nm verglichen und bei einem höheren Drehmoment wird dann eine Initialdruckerhöhung von vorzugsweise 0,01 bar pro 5 Nm errechnet, die einen Druckaufschlag darstellt.

Ebenso hat es sich als vorteilhaft herausgestellt, auch den Seifgrad und den verwendeten Seifmitteltyp zur Steuerung der Befüllung zu berücksichtigen. Dabei ist man bei der Räderfertigung bestrebt, die Seifmenge so gering wie möglich zu halten, weil Seifrückstände insbesondere die Fertigungswerkzeuge als auch die neu hergestellten Fahrzeugräder verschmutzen können. Deshalb wird im Probebetrieb für jeden Reifen- und Felgentyp eine bestimmte Seifmenge unter Berücksichtigung des verwendeten Seifentyps festgelegt, bei der ein mittleres Aufziehmoment von z.B. 150 Nm einhaltbar ist.

Weicht nun die tatsächlich zugeführte Seifmenge von dieser Referenzmenge negativ ab, so erhöht sich nicht nur das Aufziehdrehmoment, sondern beim Befüllen legen sich teilweise die Reifenwülste 40 auch weniger passgenau an den vorgesehenen Reifensitz an, so dass dadurch auch sich der Radrundlauf verschlechtern kann oder beim späteren Fahrbetrieb sich nachträglich verändert. Deshalb wird der in den Seifstationen 8, 9 gemessene Seifgrad bei der Berechnung des gesteuerten Initialdrucks mit berücksichtigt. Dabei wird der für das jeweilige Rad ermittelte Seifgrad in Form einer Seifmenge oder eine Seifzeit mit dem ermittelten Referenzseifgrad verglichen und bei einer verringerten tatsächlichen Seifmenge ein Druckzuschlag auf den Nenninitialdruck ermittelt. So sind in der Praxis für jeden Reifen 1 und jede Felge 2 meist ein bis zwei Gramm Seifmenge ausreichend. Wird nun eine verringerte Seifmenge von z.B. 0,5 g pro Seifteil ermittelt, so errechnet daraus die Auswerte- und Steuervorrichtung 3 einen Initialduckzuschlag von vorzugsweise 0,1 bis 0,2 bar pro 0,5 g verringerter Seifmenge. Dadurch kann auf einfache Weise die verringerte Gleitwirkung aufgrund der geringeren Seifmenge ausgeglichen werden, ohne dass dies die Fertigungsqualität der Fahrzeugräder negativ beeinflusst.

Für die Räderfertigung ist weiterhin qualitätsbestimmend, wie die Herstellungstoleranzen der Felge 2 und der Reifen 1 in ihren Geometrieabweichungen zueinander passen. Insbesondere bei den heutigen sogenannten Runflatreifen (Reifen mit Notlaufeigenschaften) werden die Reifenflanken derart verstärkt, dass das Fahrzeugrad auch ohne Luft auf der Felge 2 fixiert bleibt und das Fahrzeug auch bis zu einer weiter entfernten Reparaturstätte gefahren werden kann. Dazu müssen die Reifenwülste 40 eng auf der Felgenschulter 38 aufliegen, um diese Notlaufeigenschaften zu gewährleisten. Dabei kommt es bei einer statistischen Anzahl von Felgen 2 vor, dass deren Durchmesser insbesondere im Bereich der Reifenschulter 38 sich an der oberen Toleranzgrenze bewegt, wodurch sich der Reifenwulst 40 nur schwer bis auf den äußeren radialen Felgenrand aufschieben lässt. Dazu wird mit dem Felgenmessgerät 41 gleichzeitig neben der Exzentrizität im Bereich der Felgenschulter 38 auch dessen Durchmesser erfasst und in der Auswerte- und Steuervorrichtung 3 mit dessen typabhängigen Nenndurchmesser verglichen und daraus bei einer durchmesservergrößernden Abweichung ebenfalls eine Initialdruckerhöhung als Druckaufschlag errechnet. In praktischen Versuchen hat sich bei + 1% Abweichung eine Druckerhöhung von 0,2 bar in Abhängigkeit vom Reifentyp als ausreichend erwiesen, um den zusätzlichen Reibungswiderstand während des Füllvorganges zu überwinden, wodurch der Reifenwulst dann auch auf leicht größeren Felgenschulterdurchmessern optimal anlegbar ist.

Zur gesteuerten Befüllung errechnet die Auswerte- und Steuervorrichtung 3 aus dem typabhängig vorgegebenen Reifennenndruck einen Initialdruck, der zur Befüllung in die Füllglocke 27 einspeisbar ist, der um einen Anteil der Volumenvergrößerung beim Anlegen der Reifenwulst 40 am oberen Felgenrand auftritt. Je nach Volumenvergrößerung des betreffenden Fahrzeugrades unter der Füllglocke 27 ergibt sich bei einem Reifennenndruck von z.B. 2,4 bar ein Initialdruck von 3,5-5,5 bar. Dazu wird bei einer negativen Abweichung der Reifentemperatur von der ermittelten Referenztemperatur mindestens bis zu einer unteren Temperaturschwelle von beispielsweise 18°C ein Initialdruckzuschlag von typabhängigen 0,02 bis 0,05 bar pro 1°C Temperaturdifferenz errechnet. Gleichzeitig wird beim Befüllen in der Füllstation 4 auch das jeweilige Aufziehmoment berücksichtigt, das von dem in der Auswerte- und Steuervorrichtung 3 gespeicherte Referenzaufziehmoment abweicht. Bei einem vorgegebenen typabhängigen Aufziehmoment von z.B. 150 Nm wird zumindest bei höheren Aufziehmomenten bis zu einem meist zulässigen Höchstwert von 150 Nm ein Initialdruckzuschlag von 0,01 bar pro + 5 Nm Drehmoment vorgesehen. Aus dem möglichen Druckaufschlag wegen der Temperaturabweichung und/oder der Aufziehmomentabweichung errechnet die Auswerte- und Steuervorrichtung 3 einen gesteuerten Initialdruckwert mit dem das Einlassventil 24 zum Befüllen gesteuert wird.

Da bei der Räderfertigung in jedem Fall die Reifenwülste 40 und die Felgenschultern 38 zur Verbesserung der Montage mit einer Seifflüssigkeit benetzt werden, wird dessen Seifgrad auch bei der gesteuerten Druckluftbefüllung berücksichtigt. So wird die negative Abweichung von einer vorgegebenen typabhängigen Seifmenge durch einen Initialdruckzuschlag beim Befüllen ausgeglichen, indem dieser in der Auswerte- und Steuervorrichtung 3 aus den erfassten Seifgrad-Parametern errechnet wird. Zusätzlich wird auch noch der Initialdruckzuschlag bei einer positiven Durchmesserabweichung vom Nenndurchmesser der Reifenschulter 38 berücksichtigt, um beim Befüllen den erhöhten Aufspringwiderstand zu überwinden. Dazu wird die prozentuale Abweichung vom Nenndurchmesser errechnet und bei einer positiven Abweichung eine Druckerhöhung in Abhängigkeit des Reifen- und Felgentyps als Initialdruckzuschlag ermittelt.

Aus den errechneten Einzelzuschlägen errechnet die Auswerte- und Steuervorrichtung 3 unter Zugrundelegung des typabhängigen Nenndrucks als Summe einen individuellen Initialdruckwert, mit dem die Füllglocke 27 zu beaufschlagen ist. Dazu wird durch die Auswerte- und Steuervorrichtung 3 das Einlassventil 24 am Druckluftspeicher 28 geöffnet, so dass der Reifen 1 über den Ringspalt stoßartig mit Druckluft befüllt wird. Während des Füllvorgangs wird der Druckluftanstieg in der Füllglocke 27 durch den Druckaufnehmer 25 erfasst und der Auswerte- und Steuervorrichtung 3 übermittelt. Bei Erreichen des errechneten individuellen Initialdruckwertes als gesteuerter Initialdruck wird das Einlassventil 24 geschlossen.

Durch die so erfolgte Druckluftbeaufschlagung während des Füllvorgangs wird der Reifen 1 stoßartig befüllt, wodurch der obere Reifenwulst 40 mit großer Kraft auf den oberen Reifensitz 38 aufspringt und die Füllglocke 27 gleichzeitig nach oben bewegt wird, so dass sich der Füllraum unter der Füllglocke 27 leicht vergrößert.

Dieser Aufspringvorgang wird gleichzeitig noch von einem Schallaufnehmer 26 überwacht. Denn beim ordnungsgemäßen Aufspringen der Wulstränder auf die Felgenschulter 38 entsteht ein dumpfer niederfrequenter Knall, der ansonsten unterbleibt. Wird ein derartiges akustisches Signal nicht erfasst, war der gesteuerte Füllvorgang fehlerhaft und das Fahrzeugrad wird wegen fehlerhafter Befüllung automatisch aussortiert.

Bei ordnungsgemäßer Befüllung ist durch die Berücksichtigung der einzelnen Fertigungsparameter wie der Geometrieabweichung der Felge 2, dem Seifgrad, der Reifenkerntemperatur und dem Aufziehdrehmoment eine optimale Befüllung jedes Fahrzeugrades möglich. In dem einfachsten Fall dürfte für eine optimierte Befüllung bereits die Berücksichtung der Reifenkerntemperatur und des Aufziehdrehmoments ausreichen, da diese Fertigungsparameter sehr unterschiedliche Auswirkungen in Abhängigkeit des Reifentyps auf den Füllvorgang haben. Deshalb ist es möglich mit einer derart gesteuerten Füllstation 4 nacheinander sehr unterschiedliche Reifen-Felgen-Kombinationen herzustellen, ohne dass dabei die Füllstation 4 neu eingerichtet werden müsste. Gleichzeitig können mit einem derart gesteuerten Füllvorgang im Einzelfall ungünstige Fertigungsparameter im Temperatur- und Aufziehdrehmomentbereich ausgeglichen werden, um eine gute Laufruhe des fertigen Fahrzeugrades zu erreichen.

Insbesondere wird der Füllvorgang zusätzlich noch durch die Berücksichtigung der ungünstigen Geometrieabweichungen an der Felge 2 und des verringerten Seifgrades optimiert, wodurch sich insgesamt die Fertigungsqualität verbessern lässt. Beim gesteuerten Füllvorgang fallen in der Regel auch nur einzelne ungünstige Fertigungsparameter an, die meist nur zu einem einzigen Initialdruckzuschlag führen, der den Reifennenndruck nur innerhalb seiner Toleranz erhöht.

Allerdings ist es auch nicht ausgeschlossen, dass alle oder zumindest mehrere ungünstige Fertigungsparameter zu einer größeren oder mehrstufigen Initialdruckerhöhung führen, die eine nachträgliche Reifendruckreduzierung notwendig macht. Deshalb schlägt die Erfindung zusätzlich vor, durch eine axiale Nachdrückfunktion mit der Füllglocke 27 den Reifensitz innerhalb der Felge 2 zu verbessern und gleichzeitig dadurch den Reifenfülldruck zu überprüfen. Dazu wird zunächst die Füllglocke 27 über das Zweiwege-Einlassventil 24 entlüftet und die Ringfläche der Füllglocke 27 soweit nach unten bewegt, dass sich die Reifenseitenwand entgegen dem Fülldruck leicht nach innen verformt, ohne den Reifenwulst 40 von der Felgenschulter 38 abzuheben. Um dies zu erreichen, wird eine typabhängige Eindrücktiefe vorgegeben, die innerhalb eines Probebetriebs ermittelbar ist. Dazu wird durch die Auswerte- und Steuereinrichtung 3 das Hydraulikventil 37 solange geöffnet, bis der Wegaufnehmer 32 die vorgegebene Eindrücktiefe von beispielsweise 5 - 15 mm erfasst, wobei dann das Hydraulikventil 37 geschlossen wird. In der Hydraulikleitung ist zusätzlich noch ein Präzisionsdruckaufnehmer 39 für die hydraulische obere Druckmittelkammer vorgesehen, deren Druck bei geschlossenem Hydraulikventil 37 proportional zum Reifeninnendruck ist. In einem Probebetrieb ist vorab für jeden Reifentyp bei vorgegebenem Reifennenndruck und gleicher Eindrucktiefe ein Referenzdruckwert ermittelt und in der Auswerte- und Steuervorrichtung 3 gespeichert. Dieser Referenzdruckwert wird nun mit dem erfassten Druckwert am Präzisionsdruckaufnehmer 39 vergleichen und aus dessen möglicher Abweichung der tatsächliche Reifeninnendruck des geprüften Fahrzeugrades errechnet. Dieser kann bei einer unzulässigen Überschreitung signalisiert oder in einer speziellen Anzeigevorrichtung angezeigt werden.

Anschließend wird der Kombizylinder 30 über den Pneumatikteil 30 mit der Füllglocke 27 nach oben bewegt, so dass der optimal gesteuerte Füllvorgang beendet ist und das komplett montierte Fahrzeugrad einer nachfolgenden nicht dargestellten Auswuchstation zugeführt wird. Ein zu hoher Reifeninnendruck könnte auch in der Füllstation über das herkömmliche Füllventil entsprechend auf den vorgegebenen typabhängigen Nenndruck manuell oder automatisch abgesenkt werden.

Bei der vorgesehenen Auswerte- und Steuervorrichtung 3 handelt es sich vorzugsweise um eine programmgesteuerte digitale Rechenschaltung. Diese kann als zentrale Recheneinrichtung für die gesamte Fertigungslinie oder nur für die Füllstation 4 vorgesehen werden. In der beschriebenen Fertigungslinie sind lediglich die Seif- 7, 8 und die Aufziehstation 10 vor der Füllstation 4 notwenig. Die Reifenerfassungsstation 5 und die Felgenmessstation 6 sind nur erforderlich, wenn diese Daten nicht schon von den Reifen- und Felgenherstellern vorgegeben sind. Soweit ein Radialkraft-Matchen nicht vorgesehen ist, wäre auch der Montageroboter 9 entbehrlich und die Montage der unteren Reifenwulst auch in der Aufziehstation 10 ausführbar. In der industriellen Räderfertigung sind zum Teil auch Fertigungslinien vorgesehen, in denen die Seifstation 7, 8 über keine gesteuerte Seifzuführung verfügt, so dass zum optimiert gesteuerten Füllvorgang auch die erfassbare Reifenkerntemperatur und das überwachte Aufziehmoment ausreichen.

## Patentansprüche

1. Verfahren zum gesteuerten Befüllen eines auf einer Felge (2) montierten Reifens (1) in einer Reifenfüllstation (4), die eine Füllglocke (27) umfasst, die mit der Seitenfläche des Reifens (1) in luftdichten Kontakt gebracht und zwischen den von der Füllglocke (27) umgebenden Reifenwulst (40) und Felge (2) durch Bewegen der Füllglocke (27) in vorgerückter Füllstellung ein Ringspalt erzeugt wird, durch den die in die Füllglocke (27) geleitete Druckluft mit einem vom Reifentyp abgeleiteten Initialdruckwert in das Reifeninnere gelangt,
**dadurch gekennzeichnet, dass** der Initialdruck in der Füllglocke (27) zusätzlich durch die Kerntemperatur des Reifens (1) und das Drehmoment während des Aufziehens durch eine Auswerte- und Steuervorrichtung (3) gesteuert wird.

2. Verfahren nach Anspruch 1, **dadurch gekennzeichnet, dass** bei einer negativen Abweichung der Reifenkerntemperatur von einer vorgegebenen Referenztemperatur ein entsprechender Druckaufschlag durch die Auswerte- und Steuervorrichtung (3) ermittelt und dem vom Reifentyp anhängigen Initialdruck als gesteuerten Initialdruck zugeschlagen wird.

3. Verfahren nach Anspruch 1 oder 2, **dadurch gekennzeichnet, dass** bei einer positiven Abweichung des Aufziehdrehmoments von einem vorgegebenen Referenzmoment ein entsprechender drehmomentabhängiger Druckaufschlag durch die Auswerte- und Steuereinrichtung (3) ermittelt wird und den vom Reifentyp anhängigen Initialdruck als gesteuerten Initialdruckwert zugeschlagen wird.

4. Verfahren nach einem der vorhergehenden Ansprüche, **dadurch gekennzeichnet, dass** dem durch die Temperatur und dem Aufziehmoment gesteuerten Initialdruckwert zusätzlich ein vom Seifgrad abgeleiteter Druckaufschlag durch die Auswerte- und Steuervorrichtung (3) als neuer gesteuerter Initialdruckwert zugeschlagen wird.

5. Verfahren nach Anspruch 4, **dadurch gekennzeichnet, dass** bei einer negativen Abweichung der ermittelten Seifmenge des Reifens (1) und/oder der Felge (2) von einem vorgegebenen Referenzseifgrad ein entsprechender Druckaufschlag dem gesteuerten Initialdruckwert als neuer gesteuerter Initialdruckwert zugeschlagen wird.

6. Verfahren nach einem der vorhergehenden Ansprüche, **dadurch gekennzeichnet, dass** den durch die Temperatur und dem Aufziehdrehmoment gesteuerten Initialdruck zusätzlich ein von der Felgengeometrie abgeleiteter Druckaufschlag durch die Auswerte- und Steuervorrichtung (3) als neuer gesteuerter Initialdruckwert zugeschlagen wird.

7. Verfahren nach Anspruch 6, **dadurch gekennzeichnet, dass** dem durch die Temperatur und dem Aufziehmoment gesteuerten Initialdruckwert zusätzlich ein von einem vorgegebenen Felgennenndurchmesser im Bereich der Felgenschulter 38 positiv abweichender Felgendurchmesser ein entsprechender Druckaufschlag durch die Auswerte- und Steuervorrichtung (3) dem gesteuerten Initialdruckwert als neuer gesteuerter Initialdruckwert zugeschlagen wird.

8. Verfahren nach einem der vorhergehenden Ansprüche, **dadurch gekennzeichnet, dass** der vom Reifentyp angeleitete Initialdruckwert mit einem oder mehreren Druckaufschlägen als gesteuerter Initialdruckwert erhöht wird, wenn mindestens die Reifenkerntemperatur negativ und/oder das Aufziehdrehmoment positiv und/oder der Seifgrad negativ und/oder die Geometrieabweichung positiv von dem vorgegebenen Referenzwerten abweicht.

9. Verfahren nach einem der vorhergehenden Ansprüche, **dadurch gekennzeichnet, dass** der Füllvorgang durch einen Schallaufnehmer (26) überwacht wird und beim Ausbleiben eines vorgegebenen Schallsignals der Füllvorgang mit einem zusätzlichen Druckaufschlag zum gesteuerten Initialdruckwert erneut wiederholt wird.

10. Verfahren nach einem der vorhergehenden Ansprüche, **dadurch gekennzeichnet, dass** nach dem Befüllen mit einem gesteuerten Initialdruckwert oder bei mindestens einer Füllwiederholung eine in der Füllstation (4) vorgesehene Füllglocke (27) mit einem vorgegebenen Absenkdruck oder einer vorgegebenen Absenktiefe auf einer Reifenseitenfläche zusätzlich abgesenkt wird und deren Absenktiefe oder deren Absenkdruck mit einem typabhängigen Nenn- oder Referenzdruck oder einer typabhängigen Referenztiefe bei einem Nenn- oder Referenzdruck verglichen wird und aus dessen Abweichung der tatsächliche Fülldruck durch die Auswerte- und Steuervorrichtung (3) ermittelt wird.

11. Vorrichtung zur Durchführung des Verfahrens nach einem der vorhergehenden Ansprüche 1 bis 10, die eine den Initialdruck steuernde Füllstation (4) mit einer dieser zugeordneten Auswerte- und Steuervorrichtung (3) umfasst und mit einer Aufziehstation (10), die einen Drehmomentsensor (19) enthält, verbunden ist, **dadurch gekennzeichnet, dass** in der Aufziehstation (10) oder der Füllstation (4) ein Temperatursensor (18) zur Erfassung der Reifenkerntemperatur vorgesehen ist, wobei die Auswerte- und Steuervorrichtung (3) Auswertemittel enthält, durch die mit Hilfe der erfassten Reifenkerntemperatur und dem erfassten Aufziehdrehmoment ein Druckaufschlag zu einem vorgegebenen Initialdruck ermittelbar ist und die Steuermittel enthält, die den Initialdruck in der Füllglocke (27) der Füllstation (4) steuern.

12. Vorrichtung nach Anspruch 11, **dadurch gekennzeichnet, dass** die Füllstation (4) und die ihr zugeordnete Auswerte- und Steuervorrichtung (3) zusätzlich mit mindestens einer Seifstation (8, 9) verbunden ist, und den dort aufgetragenen Seifgrad mit einem Seifmengenmessgerät (11) erfasst, woraus in der Auswerte- und Steuervorrichtung (3) ein zusätzlicher Druckaufschlag ermittelbar ist, der zu einer Erhöhung des gesteuerten Initialdrucks in der Füllglocke (27) dient.

13. Vorrichtung nach Anspruch 11 oder 12, **dadurch gekennzeichnet, dass** die Füllstation (4) und die ihr zugeordnete Auswerte- und Steuervorrichtung (3) zusätzlich mit einem Felgenmessgerät (41) und einer Felgenmessstation (6) verbunden ist und durch die aus den dort erfassten Felgendurchmesserdaten in der Auswerte- und Steuervorrichtung (3) in Abhängigkeit vorgegebener Felgennenndurchmesser ein entsprechender Druckaufschlag ermittelbar ist, der zu einer Erhöhung der gesteuerten Initialdruckwerte in der Füllglocke (27) dient.

14. Vorrichtung nach. Anspruch 11 bis 13, **dadurch gekennzeichnet, dass** die Füllstation (4) einen Schallaufnehmer (26) zur Erfassung eines vorgegebenen Schallsignals enthält, der mit der der Füllstation (4) zugeordneten Auswerte- und Steuervorrichtung (3) verbunden ist, die aufgrund eines nicht erfassten Schallsignal die Füllstation (4) zu einem wiederholten Befüllen mit einem vorgegebenen erhöhten Initialdruckwert in der Füllglocke (27) steuert.

## Claims

1. Method for controlled inflation of a tyre (1) mounted on a rim (2) in a tyre inflation station (4), comprising an inflating bell (27), which is brought into airtight contact with the lateral surface of the tyre (1), an annular gap being created between the tyre bead (40) enclosed by the inflating bell (27) and the rim (2) by moving the inflating bell (27) in an advanced inflating position, through which gap the compressed air lead into the inflating bell (27) enters the interior of the tyre at an initial pressure value derived from the tyre type,
**characterized in that** the initial pressure in the inflating bell (27) is additionally controlled by means of an evaluation and control unit (3) through the core temperature of the tyre (1) and the torque during the mounting procedure.

2. Method according to claim 1, **characterized in that** in case of a negative deviation of the tyre core temperature from a preset reference temperature, a corresponding pressure addition is determined by the evaluation and control unit (3) and added as a controlled initial pressure value to the initial pressure depending on the tyre type.

3. Method according to claim 1 or 2, **characterized in that** in case of a positive deviation of the mounting torque from a preset reference torque, a corresponding, torque-dependant pressure addition is determined by the evaluation and control unit (3) and added as a controlled initial pressure value to the initial pressure depending on the tyre type.

4. Method according to one of the preceding claims, **characterized in that** an additional pressure addition depending on the degree of soaping is added to the initial pressure value which is controlled by the temperature and the mounting torque, by the evaluation and control unit (3) as a new controlled initial pressure value.

5. Method according to claim 4, **characterized in that** in case of a negative deviation of the determined soap quantity of the tyre (1) and/or the rim (2) from a preset reference soaping degree, a corresponding pressure addition is added to the controlled initial pressure value as a new controlled initial pressure value.

6. Method according to one of the preceding claims, **characterized in that** an additional pressure addition derived from the rim geometry is added, by the evaluation and control unit (3), as a new controlled initial pressure value to the initial pressure which is controlled by the temperature and the mounting torque.

7. Method according to claim 6, **characterized in that** in case of a positive deviation of the rim diameter from a preset inner rim diameter in the area of the bead seat 38, a corresponding additional pressure addition is added, as a new controlled initial pressure value, by the evaluation and control unit, to the initial pressure value controlled by the temperature and the mounting torque.

8. Method according to one of the preceding claims, **characterized in that** the initial pressure value derived from the tyre type is increased, as controlled initial pressure value, by one or several pressure additions, if at least the tyre core temperature deviates negatively and/or the mounting torque deviates positively and/or the degree of soaping deviates negatively and/or the geometry deviates positively from the preset reference values.

9. Method according to one of the preceding claims, **characterized in that** the inflating procedure is monitored by an acoustic pick-up (26) and **in that**, if a preset acoustic signal fails, the inflating procedure is repeated with a pressure addition added to the controlled initial pressure value.

10. Method according to one of the preceding claims, **characterized in that** after inflation at a controlled initial pressure value or in case of at least one repetition of the inflating procedure an inflating bell (27) provided in the inflation station (4) is additionally lowered onto a lateral tyre surface at a preset lowering pressure or with a preset lowering depth, and **in that** the lowering depth or the lowering pressure of this inflating bell is compared with a type-dependant nominal or reference pressure or a type-dependant reference depth at a nominal or reference pressure and **in that** the actual inflating pressure is determined from this deviation by the evaluation and control unit (3).

11. Device for carrying out the method according to one of the preceding claims 1 to 10, which comprises an inflation station (4) controlling the initial pressure with an evaluation and control unit (3) assigned to it, and which is connected to a mounting station (10) comprising a torque sensor (19), **characterized in that** in the mounting station (10) or the inflation station (4) a temperature sensor (18) for acquisition of the tyre core temperature is provided, and **in that** the evaluation and control unit (3) comprises evaluation means by the help of which a pressure addition to be added to a preset initial pressure may be determined based on the acquired tyre core temperature and the acquired mounting torque, and which comprises control means controlling the initial pressure in the inflating bell (27) of the inflation station (4).

12. Device according to claim 11, **characterized in that** the inflation station (4) and the evaluation and control unit (3) is additionally connected to at least one soaping station (8, 9) and **in that** the applied soap quantity is acquired by means of a soap quantity measuring instrument (11), on the basis of which value a pressure addition which serves to increase the controlled initial pressure in the inflating bell (27) can be determined in the evaluation and control unit (3).

13. Device according to claim 11 or 12, **characterized in that** the inflation station (4) and the evaluation and control unit (3) are additionally connected to a rim measuring instrument (41) and a rim measuring station (6) and **in that**, on the basis of the rim diameter data acquired there, a corresponding pressure addition which serves to increase the controlled initial pressure values in the inflating bell (27) can be determined, depending on preset inner rim diameters, in the evaluation and control unit.

14. Device according to claims 11 to 13, **characterized in that** the inflation station (4) comprises an acoustic pick-up (26) for acquisition of a preset acoustic signal, which is connected to the evaluation and control unit (3) assigned to the inflation station (4) and **in that** said evaluation and control unit, in case an acoustic signal is not acquired, controls the inflation station (4) in such a way that it repeats the inflating procedure with a preset increased initial pressure value in the inflating bell (27).

## Revendications

1. Procédé pour le gonflage commandé d'un pneumatique (1) monté sur une jante (2) dans un poste de gonflage de pneumatiques (4), qui comporte une cloche de gonflage (27), qui est amenée en contact étanche à l'air avec le flanc du pneumatique (1), et entre le talon (40) du pneumatique, entourant la cloche de gonflage (27), et la jante (2) est formée, sous l'effet du déplacement de la cloche de gonflage (27) dans la position de gonflage avancée, une fente annulaire, à travers laquelle l'air comprimé, acheminé dans la cloche de gonflage (27) avec une valeur de pression initiale dérivée du type de pneumatique, parvient à l'intérieur du pneumatique,
**caractérisé en ce que** la pression initiale dans la cloche de gonflage (27) est commandée, en plus, par la température à coeur du pneumatique (1) et le couple de rotation pendant le montage du pneumatique, par un dispositif d'analyse et de commande (3).

2. Procédé selon la revendication 1, **caractérisé en ce que**, lorsque la température à coeur du pneumatique présente une divergence négative par rapport à une température de référence prédéfinie, une augmentation de pression correspondante est calculée par le dispositif d'analyse et de commande (3) et est ajoutée, en tant que pression initiale commandée, à la pression initiale, fonction du type de pneumatique.

3. Procédé selon la revendication 1 ou 2, **caractérisé en ce que**, lorsque le couple de rotation du montage du pneumatique présente une divergence positive par rapport au couple de référence prédéfini, une augmentation de pression correspondante, fonction du couple de rotation, est calculée par le dispositif d'analyse et de commande (3) et est ajoutée, en tant que valeur de la pression initiale commandée, à la pression initiale, fonction du type de pneumatique.

4. Procédé selon l'une quelconque des revendications précédentes, **caractérisé en ce qu'**à la valeur de la pression initiale commandée par la température et le couple de montage du pneumatique, est ajoutée, en plus, une augmentation de pression, dérivée du degré d'enduction de pâte de montage, par le dispositif d'analyse et de commande (3) en tant que nouvelle valeur de la pression initiale commandée.

5. Procédé selon la revendication 4, **caractérisé en ce que**, lorsque la quantité de pâte de montage du pneumatique (1) et/ou de la jante (2) présente une divergence négative par rapport à un degré d'enduction de référence prédéfini, une augmentation de pression correspondante est ajoutée à la valeur de la pression initiale commandée, en tant que nouvelle valeur de la pression initiale commandée.

6. Procédé selon l'une quelconque des revendications précédentes, **caractérisé en ce qu'**à la pression initiale commandée par la température et le couple de rotation de montage du pneumatique est ajoutée, en plus, une augmentation de pression, dérivée de la géométrie de la jante, par le dispositif d'analyse et de commande (3) en tant que nouvelle valeur de la pression initiale commandée.

7. Procédé selon la revendication 6, **caractérisé en ce qu'**à la pression initiale commandée par la température et le couple de rotation de montage du pneumatique est ajoutée, en plus, une augmentation de pression correspondante, fonction du diamètre de la jante présentant une divergence positive par rapport à un diamètre nominal dans la zone de l'épaule (38) de la jante, par le dispositif d'analyse et de commande (3) à la valeur de la pression initiale commandée en tant que nouvelle valeur de la pression initiale commandée.

8. Procédé selon l'une quelconque des revendications précédentes, **caractérisé en ce que** la valeur de la pression initiale, fonction du type de pneumatique, est augmentée par une ou plusieurs augmentations de pression en tant que valeur de la pression initiale commandée, lorsqu'au moins la température à coeur du pneumatique présente une divergence négative et/ou le couple de rotation du montage du pneumatique présente une divergence positive et/ou le degré d'enduction de pâte de montage présente une divergence négative et/ou l'écart géométrique présente une divergence positive par rapport aux valeurs de référence prédéfinies.

9. Procédé selon l'une quelconque des revendications précédentes, **caractérisé en ce que** le processus de gonflage est surveillé par un capteur de sons (26), et en l'absence d'un signal acoustique prédéfini, le processus de gonflage est renouvelé avec une augmentation de pression supplémentaire par rapport à la valeur de la pression initiale commandée.

10. Procédé selon l'une quelconque des revendications précédentes, **caractérisé en ce que**, après le gonflage avec une valeur de pression initiale commandée ou dans le cas d'au moins un renouvellement du processus de gonflage, une cloche de gonflage (27), prévue dans le poste de gonflage (4), est abaissée davantage avec une pression d'abaissement prédéfinie ou une profondeur d'abaissement prédéfinie sur un flanc du pneumatique, et sa profondeur d'abaissement ou sa pression d'abaissement est comparée à une pression nominale ou pression de référence fonction du type de pneumatique ou à une profondeur de référence fonction du type de pneumatique en présence d'une pression nominale ou pression de référence, et à partir de la divergence de celles-ci, la pression de gonflage réelle est calculée par le dispositif d'analyse et de commande (3).

11. Dispositif destiné à la mise en oeuvre du procédé selon l'une quelconque des revendications précédentes 1 à 10, lequel dispositif comporte un poste de gonflage (4), commandant la pression initiale, avec un dispositif d'analyse et de commande (3) associé à celui-ci, et est relié à un poste de montage du pneumatique (10), qui contient un capteur de couple de rotation (19), **caractérisé en ce que** dans le poste de montage du pneumatique (10) ou le poste de gonflage (4) est prévu un capteur de température (18), destiné à détecter la température à coeur du pneumatique, le dispositif d'analyse et de commande (3) contenant des moyens d'analyse, par lesquels une augmentation de pression par rapport à une pression initiale prédéfinie peut être calculée à l'appui de la température à coeur du pneumatique détectée et du couple de rotation de montage du pneumatique détecté, et contenant des moyens de commande qui commandent la pression initiale dans la cloche de gonflage (27) du poste de gonflage (4).

12. Dispositif selon la revendication 11, **caractérisé en ce que** le poste de gonflage (4) et le dispositif d'analyse et de commande (3) qui lui est associé sont reliés en plus à au moins un poste d'enduction de pâte de montage (8, 9), et le degré d'enduction de la pâte de montage appliquée dans celui-ci est détecté par un dispositif de mesure (11) de la quantité de pâte de montage, à partir de la valeur détectée une augmentation de pression supplémentaire peut être calculée dans le dispositif d'analyse et de commande (3), laquelle est destinée à une augmentation de la pression initiale commandée dans la cloche de gonflage (27).

13. Dispositif selon la revendication 11 ou 12, **caractérisé en ce que** le poste de gonflage (4) et le dispositif d'analyse et de commande (3) qui lui est associé sont reliés, en plus, à un dispositif de mesure de la jante (41) et à un poste de mesure de la jante (6) et par lesquels, à partir des données du diamètre de la jante qui y sont mesurées, une augmentation de pression correspondante peut être calculée dans le dispositif d'analyse et de commande (3) en fonction d'un diamètre nominal prédéfini de la jante, laquelle est destinée à une augmentation des valeurs de la pression initiale commandée dans la cloche de gonflage (27).

14. Dispositif selon l'une quelconque des revendications 11 à 13, **caractérisé en ce que** le poste de gonflage (4) comporte un capteur de sons (26) destiné à détecter un signal acoustique prédéfini, lequel est relié au dispositif d'analyse et de commande (3), qui est associé au poste de gonflage (4) et qui, sur la base de la non-détection d'un signal acoustique, commande le poste de gonflage (4) pour un nouveau processus de gonflage avec une valeur de pression initiale prédéfinie plus élevée dans la cloche de gonflage (27).
